# EUROPEAN PATENT SPECIFICATION

(11) **EP 2 406 056 B1**
(45) Date of publication and mention of the grant of the patent: **17.07.2013**
(21) Application number: 10709197.7
(22) Date of filing: 10.03.2010
(51) Int. Cl.: B29C 47/10, B29C 47/92, C09D 5/03, C08J 3/205

(54) **POWDER COATING EXTRUSION PROCESS**
PULVERBESCHICHTUNGSEXTRUSIONSVERFAHREN
PROCESSUS D'EXTRUSION DE REVÊTEMENT EN POUDRE

(30) Priority: 13.03.2009 EP 09155117; 17.04.2009 US 170198 P
(43) Date of publication of application: 18.01.2012
(73) Proprietor: Akzo Nobel Coatings International B.V., 6824 BM Arnhem (NL)
(72) Inventor: MORGAN, Andrew Robert, Tyne&Wear NE40 3ED (GB)
(74) Representative: Akzo Nobel IP Department
(86) International application number: PCT/EP2010/053000
(87) International publication number: WO 2010/103019

(56) References cited:
- WO-A1-01/59016
- WO-A1-2005/103170
- WO-A2-01/28306
- WO-A2-01/64774
- WO-A2-2006/047238

## Description

### FIELD OF THE INVENTION

The present invention relates to a process for preparing a powder coating composition, and more particularly to a powder coating extrusion process in which a suspension or dispersion of a particulate material in water is injected into the extruding device.

### BACKGROUND TO THE INVENTION

Powder coating compositions are solid compositions that generally comprise a solid film-forming resin, usually with one or more pigments and, optionally, one or more performance additives such as plasticizers, stabilizers, flow aids and extenders. The resins are usually thermosetting, incorporating, for example, a film-forming polymer and a corresponding crosslinking agent (which may itself be another film-forming polymer). Generally, the resins have a T_{g}, softening point or melting point above 30°C.

Conventionally, the powder coating is produced by dry-blending the components of the composition together, and then extruding the blend at a temperature above the softening point of the resin but below the curing temperature thereof to produce a melt-mix of the formulated ingredients. The extrudate is immediately cooled and pressed into a solid sheet, where the formulated coating material is progressively kibbled and ground to a well-defined particle distribution for spraying by an applicator.

For those powder coating compositions that are to contain pigments and additives, thorough dry blending of the film-forming resin with these components is typically achieved using a line of two high-intensity pre-blending mixers and a low-intensity final mixer. High-speed, revolving blades in the pre-blending mixers evenly distribute small amounts of pigments and additives and aid in the dispersion of resin. The final mixer - typically containing tumble and chopper blades - accepts product from the pre-blending mixers along with raw materials that have not passed through pre-blending. Dry-mixed material from the final mixer or from an intermediate weigh hopper then enters the feed port on the extruder.

In spite of the use of such mixers, it is still commonplace for pigments and additives to be inefficiently 'wetted' and thereby not be uniformly dispersed throughout the mixture and throughout the powder-based coating composition. It is not unusual for as much as 25% of the production of colored powder to have to be reprocessed back through the extruder in order to more fully disperse the color and achieve reproducible color matches.

Where pigments are not adequately dispersed, maximum color strength development in the powder product may not occur or that colour development may be inconsistent. This is especially true when light tint or grays are being produced and in which the actual usage of colored pigment may be less than 1% of the total weight of powder produced. Consequently, to achieve suitable color strength - for aesthetic and functional purposes - it is often necessary for formulators to combine excessive amounts of the pigment with the powder-based binder. But this use of excessive pigment can be highly problematic. The pigment is frequently the most expensive component of the powder-based coating composition and the use of an excessive amount thereof thus drives up the cost of the coating. Furthermore, an excessive amount of pigment - and indeed other additives - can contribute to difficulties in applying the powder-based coating composition to the substrate and also leads directly to poor appearance of the cured film. For example, too high a pigmentation can cause surface defects such as pin-holing and orange peel.

Certain methods have been developed to try to address the problem of colour control and the related problem of non-homogenous distribution of functional additives in powder coatings.

M. C. Meyer in "Modern Approach to the Pigmentation of Powder Coatings" (www.sunchemical.com) describes the development of pre-dispersed pigment concentrates or master-batches where the pigment is already pre-dispersed into a resin which is compatible with the powder coating and typically has a low glass transition temperature (e.g. 130°F). Such pigment dispersions are incorporated into the powder coating formulation in the same way as a dry pigment, that is by being premixed together with the resins and other ingredients of the powder coating formula and subsequently fed into the extruder. During extrusion, the carrier resin melts together with the other components, distributing the pigment.

To fully realize the peak color strength inherent in the primary particle of the pigment, the method of Meyer requires each of the available coloured pigments to be optimally pre-dispersed in the solid carrier resin. The pre-dispersion process comprises multiple stages and begins with the filtration and washing of the primary pigment particles using a plate and frame filter press: The pigments are discharged as water wet "press cake" which is then dried, ground and blended with the carrier resin.

WO 2006 / 047238 (Degussa Corporation) describes a pigment pre-dispersion in which the carrier resin is liquid, that pre-dispersion optionally containing organic and inorganic solvents, surfactants and anti-oxidant. A premix is prepared by adding the pigment dispersion in the liquid resin to other powder coating raw materials in a dispenser rotating at a speed of about 100 rpm to about 6000 rpm for about 1 minute to about 120 minutes and then charging the premix to an extruder. The premix is then processed at an elevated temperature until such time as a uniform melt of the premix is formed.

WO2005/103170 (PPG Industries) provides a process for manufacturing thermosetting powder coating compositions comprising the steps of: A) feeding a base material to an extruder from an initial position; B) adding at least one hard to incorporate additive to the base material after the base material enters the extruder and before it exits the extruder; and, C) passing the combined base material and hard to incorporate additive(s) through at least a portion of the extruder to form a thermosetting powder coating composition. In an embodiment, the hard to incorporate additive comprises pigment(s), which are preferably hyper-dispersed and which may be added to the extruder in the form of either a liquid pigment dispersion or a dried liquid pigment dispersion. As used in this publication, the term liquid pigment dispersion means a pigment dispersed in a solubilized resin which is compatible with the base materials.

Although there are advantages to the use of pigment pre-dispersions of these kinds, there are associated disadvantages. The production of the pre-dispersions requires a significant input of time and energy. The formulator must also find a carrier resin that is compatible with the binder systems used in the production of finished powder coatings. And furthermore, the efficient distribution of the pigment relies either upon the carrier resin melting as early as possible after its introduction into the barrel of the extruder or upon the flow behavior of the liquid carrier resin at the same point: This can impose requirements on the temperature and pressure conditions in the extruder that are not optimum for binder systems of the powder coating.

WO2001/64774 (ICI PLC) relates to a process for producing a low viscosity aqueous dispersion by dispersing a polymer in an aqueous medium in an extruder at a temperature above 100°C, preferably above the melting point of polymer. The pressure inside the extruder is maintained above atmospheric pressure so that the aqueous medium does not boil inside the extruder. Other ingredients, such as fillers, can be injected with the aqueous medium. A coating composition is prepared either in dispersion or as a powder.

### STATEMENT OF THE INVENTION

In accordance with the invention there is provided a process for the manufacture of a powder coating comprising the steps of:
Preparing a powder coating premix comprising a resin and optionally a crosslinker for said resin;
Feeding the premix through a melt extruder, wherein the melt extruder conditions comprise a temperature in the range from 100° to 200°C and a pressure in the range from 1 to 16 bar;
Cooling the extruded material; and,
Comminuting it to fine particles,
wherein said process is characterized in that from 1 to 25 wt. % (based on the weight of said premix) of a suspension or dispersion of a particulate material in water is added to the melt extruder, said water being immiscible with at least the resin of the powder coating premix and said water being maintained within the melt extruder as a superheated, pressurized liquid which evaporates from the premix only as it exits the extruder, the particulate material of the suspension or dispersion being retained within the extruded material.

A fraction of the aqueous suspension or dispersion may be added to the melt extruder in combination with the premix feed but it is preferred that the majority of - and, optimally, substantially all of - the aqueous suspension or dispersion is added directly into the premix in the molten state within the melt extruder. In this regard, the aqueous suspension or dispersion may be injected at one or more points along the path of the melt through the extruder.

The amount of water so added via the aqueous suspension or dispersion should have a minimal quenching effect on that temperature in the extruder necessary to maintain the premix in a molten state. The water should quickly equilibrate to the temperature and pressure of the melt extruder at the point of liquid injection. It is thereby preferred that the aqueous dispersion or suspension be added in an amount of from 1 to 15 wt.% (based on the weight of the premix), preferably from 3 to 14 wt.% and more preferably from 4 to 7 wt. %.

The temperature and pressure conditions of the melt extruder are set such that, after its injection, the water remains in the liquid state within the extruder and does not attain a supercritical liquid state: In being immiscible with - and preferably inert towards - at least the resin of the powder coating premix, the water forms a second liquid phase within the extruder. The water does not plasticize or solubilize the resin but the resultant two-phase system lowers the viscosity of the premix within the extruder.

Without being bound by theory, the hydrophobic interaction between the water phase and the resin phase has the effect of orienting the resin within the premix; the non-polar polymer components of the premix mass together, with the more polar components of the premix being presented to the water phase. Under these conditions, the particulate material borne by aqueous phase can become highly distributed - even at the nanoscale - throughout the molten resin.

The water added to the melt extruder evaporates as it passes into a reduced pressure environment on exiting the melt extruder. The evaporation of the water firstly acts to cool the molten extrudate. Secondly, the evaporation introduces discontinuities into the cooling, solidifying extrudate which allow for that extrudate to be more easily broken into particles of particular dimensions. And thirdly, the evaporation of the water provides a distributive force for particulate materials added in the aqueous suspension or dispersion.

The final distribution of the particulate material within the extrudate will be determined, at least in part, by the amount of that material in the aqueous suspension or dispersion and the particle size of the material. It is preferred that the particulate material constitutes from 0.1 to 60 wt. % of the dispersion or suspension. Equally, it is preferred that the particulate material has a mean particle diameter in the range from 0.001 to 5 microns, preferably from 0.01 to 2 microns and more preferably from 0.1 to 0.5 microns.

The method of this invention has particular utility for the distribution of particulate inorganic and organic pigments. Such organic pigments may optionally be surface modified and may be selected from the group consisting of: Azo pigments; phthalocyanine pigments; and, polycyclic / heterocyclic pigments. Similarly, suitable inorganic coloring pigments may be selected from the group consisting of: rutile and anatase titanium dioxide; carbon black; lampblack; graphite; raw and burnt umber; raw and burnt sienna; calcium carbonate; barium sulfate; kaolinite; talc; silica; micaceous iron oxide; ferric iron oxide brown; red iron oxide; aluminium flakes; strontium chromate; and, zinc phosphate. The distribution of these pigments may be further improved by further suspending or dispersing in the water a dispersing polymer in an amount of from 0.01 to 20 wt. % based on the total weight of the particulate pigments.

In order to evaluate the distribution of pigments throughout the resin, either the extrudate or the molten premix within the extruder may be color tested. Where such testing can be performed within the timescale under which a batch of powder coating is to be produced, it becomes possible that the process of this invention may include a feedback control mechanism. For instance, where the initial loading of a given batch is found to have unsatisfactory color properties, the results of the color testing may used to modify at least one of: the temperature of the melt extruder; the pressure of the melt extruder; the rate at which the premix is fed into the extruder; the rate at which the dispersion or suspension is added to the extruder; and, the amount of particulate material in said suspension or dispersion. Compared to so-called batch control, this feedback control minimizes the loss of product by minimizing the amount of unsatisfactory extrudate. Furthermore it obviates the need to pre-test resin formulations for each pigment or pigment combination.

The resin of the premix is not intended to be a limiting feature of this invention and may comprise any known thermoplastic or thermosetting resin utilized for powder coating compositions. For example, suitable thermosetting resins include carboxyl functional polyester, hydroxyl functional polyesters and hybrid systems selected from the group consisting of epoxy-acrylic, polyester-acrylic, and epoxy-polyester resin systems. However, in a preferred aspect of the invention, the resin is selected from the group consisting of thermosetting resins having a softening point between 45° and 120°C.

In accordance with a second aspect of the invention there is provided a powder coating composition obtainable by the process as defined hereinbefore.
It was found that clear differences are found between a powder coating composition obtained through the process of the current invention and powder coating compositions prepared by a conventional process, i.e. a process wherein a powder coating composition is prepared by feeding a premix through a melt extruder without the step of adding a suspension or dispersion of a particulate material in water to the melt extruder.
Close examination ,e.g. by using an electron microscope, of the fracture surface of a material prepared according to the process of the present invention shows a smoother surface of the powder with less micro-voids than materials prepared by a conventional process.

### BRIEF DESCRIPTION OF THE DRAWINGS

The present invention will be described with reference to the appended drawing in which:
Fig. 1 is an illustration of a first embodiment of a melt extruder suitable for performing the process of this invention.
Fig. 2 is an illustration of a second embodiment of a melt extruder suitable for performing the process of this invention.

### DEFINITIONS

For the purpose of describing the proportions of components in the compositions of this invention, the term "resin" includes any resin or polymer per se, as well as the curing agent.

As used herein the term "particulate" means comprising of a small discrete mass of solid or liquid matter that remains individually dispersed in a dispersion medium.

When used herein, the "glass transition temperature" or T_{g} of any polymer may be calculated as described by Fox in Bull. Amer. Physics. Soc.,1, 3, page 123 (1956). The T_{g} can also be measured experimentally using differential scanning calorimetry (at a rate of heating 20° C per minute, wherein the T_{g} is taken at the midpoint of the inflection). Unless otherwise indicated, the stated T_{g} as used herein refers to the calculated T_{g}.

### THE SUSPENSION OR DISPERSION IN WATER

The particulate material to be suspended or dispersed in water may be selected from particulate components used as conventional additives in powder coating compositions. Such additives are employed to impart or improve a property of the coating - such as corrosion resistance - and the effectiveness of the additives in this regard is enhanced when they are dispersed homogeneously throughout the powder coating composition. The suspension or dispersion of such particulate additives within water added to the extruder in accordance with this invention provides for such homogenous distribution.

The particulate materials may principally be selected from: pigments; fillers; zinc particulates, including zinc dust; nano-clay particles, such as Perkalite®; (rubber toughening) latex particles, particularly soft latex particles; flow control agents; degassing agents; and, anti-blocking agents. However, further suitable particulates may include: adhesion promoters; light stabilizers and UV absorbers; flow and leveling additives; gloss-modifying additives; cratering agents; cure agents; texturizers; surfactants; antioxidants (in particular phosphites, hindered phenols and propionates); biocides; and, organic plasticizers.

In a preferred embodiment of the invention, the particulate material dispersed or suspended in the water comprises organic coloring pigments, inorganic coloring pigments or mixtures thereof. Organic pigment particles which may optionally be surface modified should preferably be selected from the group consisting of: Azo pigments; phthalocyanine pigments; and, polycyclic / heterocyclic pigments. Inorganic coloring pigments should preferably be selected from the group consisting of: rutile and anatase titanium dioxide; carbon black such as 9875 Black available from Engelhard Corporation (Ohio); lampblack; graphite; raw and burnt umber; raw and burnt sienna; calcium carbonate; barium sulfate; kaolinite; talc; silica; micaceous iron oxide; ferric iron oxide brown; red iron oxide; aluminium flakes; strontium chromate; and, zinc phosphate.

The amount of colorant or pigment may range up to 45 parts per hundred resin by weight (phr), and preferably ranges from 0.1 to 40 phr, more preferably from 0.5 to 35 phr.

Fillers which are particularly suitable for being incorporated via the suspension or dispersion include: silica sols; glass particles; glass fibers; metal fibers; metal flakes; particles of micas; particles of calcium metasilicate; and, mixtures thereof.

Flow control agents may be present in the added suspension or dispersion in an amount up to 3 wt. % based on the weight of the water. Such flow control agents, which enhance the compositions melt-flow properties and assist in eliminating surface defects, typically include acrylics and fluorine based polymers. Examples of commercially available flow control agents include: Resiflow® P-67, Resiflow® P-200 and Clearflow® (all available from Estron Chemical Inc., Calvert City, KY); BYK® 361 and BYK® 300 from BYK Chemie (Wallingford, CONN); and, Mondaflow® 2000 from Monsanto (St. Louis, MO).

Degassing agents can also be present in the added water in an amount of from 0.1 to 5 wt. %, based on the weight of the water. Such degassing agents facilitate the release of gases during the curing process. Examples of commercially available degassing agents include: Benzoin available from Well Worth Medicines; and, Uraflow® B available from GCA Chemical Corporation (Brandenton, FLA).

The added water may also comprise an antiblocking agent (dry-flow additive) in an amount from 0.05 to 1.0 wt. %, based on the weight of the water. Examples of such additives include fumed silica, precipitated silica, fumed alumina, clay, talc and mixtures thereof.

It will be recognized that powerful forces are required to introduce particulate solids into - and to disperse them throughout - the melt within the extruder. This dispersion depends in part upon on the ease with which the solid can be wetted by the surrounding medium and on the affinity to this medium. In order to reduce the forces required for dispersion, it is preferable to employ dispersing agents which facilitate the incorporation of the particulate solids. These are in most cases surface-active substances, also known as tensides, which have an anion-active or cation-active or non-ionogenic structure.

In this invention, dispersing agents may be added in relatively small quantities - for example from 0.01 to 25 wt.% based on the total weight of the particulate material - into the water in which the particulate materials are dispersed. In those embodiments where the particulate material suspended or dispersed in the water comprises pigments, it is preferred that this particulate material further comprises a dispersing polymer in an amount from 0.01 to 20 wt. % based on the total weight of the particulate pigments.

Suitable wetting and dispersing agents are described, for example, in: US Patent No. 5,735,944; EP-A-154 678; EP-A-270 126; EP-A-318 999; DE-A-3 930 687; DE-A-1 157 326; and, DE-A-1 157 327.

The suspension or dispersion in water can also contain up to 50% of dissolved materials such as carbon dioxide, nitrous oxide or ammonia which may or may not be reactive with the components of the premix but influence the polar response of the resin and thus the dimensions and structure of the two phases in the melt extruder.

In order to form the suspension or dispersion, a pre-mix stage is typically performed in which all the required additive materials are homogenized. The premix is then processed through an appropriate mill, such as a horizontal media mill: One or more passes through the mill are typical. The resulting dispersion or suspension is then in form which may be added to a melt extruder via an injection port, as described further below.

### THE POWDER COATING PREMIX

The powder coating premix of the present invention necessarily comprises a resin and optionally a crosslinker therefor. The premix may obviously comprise other components as are known in the art and which will be discussed hereinafter.

### 1. RESINS AND CROSSLINKERS

The resins and the crosslinking systems in the powder composition are not intended to be limiting features of the present invention. Accordingly, suitable resins for inclusion within the powder coating premix include both thermoplastic and thermoset base resins.

When used in powder coatings, thermoplastic resins must melt and flow out to a thin film within a few minutes at stoving temperatures from 120°C to 300°C without significant degradation. As a result suitable thermoplastic resins for use in the practice of the present invention include polyamides, polyesters, cellulose esters, polyethylene, polypropylene, poly(vinyl chloride) [PVC], poly(vinylidene fluoride) [PVF2], polyphenylsulfones and poly(tetrafluoroethylene) [PTFE] of which polyphenylsulfones and PTFE are particularly preferred. All of the suitable thermoplastic resins are readily available from commercial sources.

The thermosettable resins which are suitable for this invention include epoxy resins, polyurethanes, silicones, crystalline resins, polyesters (including unsaturated polyesters), acrylics, and hybrids such as epoxy-acrylic, polyester-acrylic, and epoxy-polyester. The glass transition temperature (Tg) of these resins must be high enough that the particles do not fuse together or sinter at temperatures likely to be encountered during transportation and storage. Preferably, the T_{g} is in the range from 45° to 120°C, within which range a T_{g} greater than 55° is more preferred.

### 1.1 EPOXY RESINS

Suitable epoxy resins are those containing aliphatic or aromatic backbones with oxirane functionality and are exemplified by: the diglycidyl ether condensation polymers resulting from the reaction of epichlorohydrin with a bisphenol e.g. bisphenol A and bisphenol F in the presence of an alkaline catalyst; and, glycidyl ethers of phenolic novolac resins synthesised by reacting phenolic novolac resin with epichlorohydrin in presence of sodium hydroxide as a catalyst.

Generally the epoxy resins should have: an epoxide equivalent weight (EEW) between 600 and 2000; a hydroxyl equivalent weight between 300 and 400; and, a melt viscosity in the range from 200 to 2000 centipoise (cps) at 150°C, preferably from 300 to 1000 cps. The low melt viscosities of such resins may allow them to be extruded at temperatures less than 200°C.

Commercially available epoxy resins which are preferred for the purposes of this invention are the bisphenol A epoxies sold under the trademarks ARALDITE® GT-7004, GT-7071, GT-7072, GT-6259 (Huntsman LLC) EPON® 1001 and 2042 (Shell Chemicals, Inc.).

A wide variety of curing agent for epoxy resins is available depending on the process and properties required. Dicyandiamide, modified and substituted dicyandiamides, solid dicarboxylic acids and their anhydrides are examples of those agents that may be used for the curing of epoxy resins. A curing agent in solid form is preferred for convenience in the formulation of epoxy resin-based powders as well as in the formulation of other resin-based powders in this invention.

### 1.2 SILICONE RESINS

Silicone resins for use in this invention should be: solid at room temperature; have a T_{g} of greater than 55° C, preferably greater than 60°C; and a viscosity of between about 500 and about 10,000 cps at 150° C., preferably 2000 to 5000 cps. These viscosity parameters are required for appropriate melt-flow of the molten coating powder at the temperatures at which the coating powder is fused and cured. The lower limits of T_{g} recited above are necessary to prevent undue blocking of a coating powder. Ideally, the silicone resins should also have siloxane functionality (Si-O-H) which should preferably be characterized in that the -OH content of the resin is in the range from 2.5 to 7.5 wt.%.

The organic moieties of the silicone resins are typically aryl, particularly phenyl, or short chain (C₁-C₄) alkyl. If the eventual powder coating is required to have good heat resistance, methyl and phenyl groups are the organic moieties of choice. In any event, the silicone resins should preferably have a degree of substitution of less than 1.5 and more preferably a degree of substitution in the range from 1 to 1.5 (wherein the degree of substitution is defined as the average number of substituent groups per silicon atom and is the summation of the mole per cent multiplied by the number of substituents for each ingredient).

Suitable silicone resins for use in this invention are described inter alia in U.S. Patents Nos. 3,170,890; 4,879,344; 3,585,065; and, 4,107,148. Examples of suitable, commercially available silicone resins are phenylsilicone SY-430 and methylsilicone MK (both products of Wacker Silicone, USA) and methylphenylsilicone 6-2230 (Dow Corning).

The silicone resins of the present invention should preferably contain less than 0.2 wt.% of organic solvents, preferably less than 0.1wt.%. However, most commercial silicone resins contain some residual organic solvent as a consequence of the process of silicone resin synthesis. Such organic solvent tends to be internally trapped within the silicone resin and is generally not removed when the silicone resin is melt blended with other components to form a powder coating composition. Accordingly, it may be necessary to substantially remove such residual organic solvent. This is accomplished by melting the silicone resin and removing solvent from the molten resin by sparging with an inert gas or by vacuum.

### 1.3 HYDROXY-FUNCTIONAL POLYESTER RESINS

Suitable hydroxy functional polyesters for use in the process of this invention are predominantly hydroxyl in functionality and should preferably be characterized by having: i) a hydroxyl number in the range from about 25 to about 50; ii) an acid number less than or equal to 15 but preferably in the range from about 1 to 2; and, iii) a T_{g} higher than 50°C.

Hydroxy functional polyesters meeting these requirements are commercially available as RUCOTE ® 107, CARGILL ® 3000 / 3016, and CRYLCOAT ® 3109. Equally, however such polyesters may be formed as the condensation products of polybasic carboxylic acids and polyhydric alcohols. As such, carboxylic acids useful for the preparation of such polyester resins include one or more of phthalic acid, tetra- and hexahydrophthalic acids and their anhydrides, adipic acid, sebacic acid, terephthalic and isophthalic acids, 1,3-and 1,4-cyclohexane-dicarboxylic acids, and trimellitic anhydride, esters of such acids. Further, suitable bifunctional alcohols include ethylene-, diethylene-, propylene-, and trimethylene glycol and suitable dihydric alcohols include hexanediol, 1,3-, 1,2-, and 1,4-butanediols, neopentyl glycol, 2-butyl-2-ethyl-1,3-propanediol, 2-methyl-1,3-propanediol, 1,4-cyclohexanediol, trimethylolpropane, and mixtures thereof. The skilled reader will be aware of a number of processes for carrying out the condensation of the acids and alcohols.

The hydroxyl-functional polyesters are curable through the hydroxyl groups with aliphatic and aromatic isocyanates and with aminoplasts. Isocyanate curing forms resins which technically are polyurethanes but are often sold as polyesters. Aminoplasts are oligomers that are the reaction products of aldehydes, particularly formaldehyde, with amino- or amino-group-carrying substances exemplified by melamine, urea, dicyandiamide, and benzoguanamine. It is preferable in many instances to employ precursors of aminoplasts such as hexamethylol melamine, dimethylol urea, and their etherified forms, i.e., modified with alkanols having from one to four carbon atoms. Hexamethoxymethyl melamine and tetramethoxy glycoluril exemplify said etherified forms. Thus, a wide variety of commercially available aminoplasts and their precursors can be used for combining with the linear polyesters of this invention. Particularly preferred are the amino cross-linking agents CYMEL ® available from American Cyanamid.

Aminoplast curing agents are typically provided in an amount sufficient to react with at least one-half the hydroxyl groups of the polyester, i.e., an amount at least one-half the stoichiometric equivalent of the hydroxyl functionality. Preferably, the amount of cross-linking agent is sufficient to substantially completely react with all of the hydroxyl functionality of the polyester, and cross-linking agents having nitrogen cross-linking functionality are provided in amounts of from about 2 to about 12 equivalents of nitrogen cross-linking functionality per equivalent of hydroxyl functionality of the polyester.

The curing of hydroxyl-functional polyesters with an aminoplast takes place in about 20-30 minutes at temperatures within the range of from about 120-200°C (about 250-400°F).

Acidic catalysts may be used to modify the curing of the polyester with an aminoplast resin by lowering the required temperature or raising the reaction rate or both. When it is desirable to lower the rate at ambient storage temperatures, the acidic catalyst may be blocked with an amine. Volatile amines which may escape from the curing film when the catalyst is unblocked by heat are suitable for this purpose. It is particularly desirable for the purposes of this invention to delay full curing of the composition until the coated metal substrate has traveled about three-fourths of the length of the curing oven. In a particular embodiment, the dwell time before full curing was about 33 seconds. NACURE ® 1557, an amine-blocked dinonylnaphthalenesulfonic acid available King Industries, is an example of the blocked acid catalyst suitable for use in the aminoplast curing of the powder coating composition of this invention. The curing may also be retarded by the addition of free amines such as triethanolamine.

Diisocyanates cure the hydroxy-functional polyester resin by forming urethane linkages between the polymer chains at the hydroxyl group sites. Suitable aliphatic diisocyanates are exemplified by hexamethylene diisocyanate (HDI), diisocyanato di-cyclohexylmethane (sold as DESMODUR W® by Mlles Chemical) and isophorone diisocyanate (IPDI). Toluene diisocyanate (TDI) is an example of a suitable aromatic diisocyanate. The low-temperature reactivity of free diisocyanates may be lessened by adducting them with blocking agents selected from phenol, cresols, isononylphenol, amides such as epsilon - caprolactam, oximes such as methyl-ethyl ketoxime and butanoneoxime, active methylene group-containing compounds such as diethylmalonate, and isopropylidene malonate and the acetoacetates, and sodium bisulfite. The adducts have a weak bond which breaks at an elevated temperature to regenerate the blocking agent and the free diisocyanate which can react with the polyester in the desired manner. Examples of the blocked diisocyanates include caprolactam blocked isophorone diisocyanate and caprolactam blocked hexamethylene diisocyanate. Examples of commercially available curing agents of this type are the 24-2400, 24-2430, and 24-2450 products sold under the CARGILL trademark.

An excess of from about 10 to 20%, preferably 5 to 10%, by weight of the diisocyanate may be used beyond the stoichiometric amount. The reaction of the polyester with the diisocyanate is performed in the absence of moisture at a temperature of from about 80°C to about 230°C and, when a blocked diisocyanate is used, the temperature is preferably at least about 120°C and is more preferably about 200°C or higher. Dibutyltin dilaurate and triethylene diamine are examples of the catalysts that may be used to promote the diisocyanate cure. The use of blocked isocyanates in the curing of coatings is described in a paper presented by T. A. Potter et al. at the Water-Borne & Higher-Solids Coatings Symposium at New Orleans, February 5-7, 1986.

Further alternatives curing agents to diisocyanates include: Primids, such as Primid XL552 and QM1260 which are hydroxyalkylamides available from EMS-Primid; Araldite PT910 gylcidyl ester available from Ciba Geigy; and Uranox available from DSM.

### 1.4 CARBOXY FUNCTIONAL POLYESTER RESINS

Carboxyl-functional polyesters are also suitable for the purposes of this invention. These may be made from the same polyfunctional acids and glycols as the hydroxyl-functional polyesters but with an excess of the acids. The acid number is from about 18 to about 55. Preferable commercial products are: CRYLCOAT ® 430, 3010 and 7617 (available from UCB); URALAC ® 3400 and 3900; and, GRILESTA V7372 available from Ems-Chemin AG. Fast cure of these carboxy functional polyesters may be achieved with polyepoxide curing agents such as triglycidyl isocyanurate (TGIC).
Unsaturated polyesters suitable for use in the practice of the invention include ethylenically unsaturated reaction products of an organic di- or polyfunctional acid and a di- or polyfunctional alcohol. Typically the acid is unsaturated. Such polyester resins typically work best in combination with a copolymerizable second resin such as diallyl phthalate. Initiators may also need to be incorporated.

### 1.5 ACRYLIC RESINS

The preferred acrylic resins for powder coatings are copolymers of alkyl acrylates and/or methacrylates with glycidyl-methacrylates and/or acrylates and olefinic monomers such as styrene. Glycidyl-functional acrylic resins are sold by Mitsui Toatsu Chemicals, Inc. as ALMATEX ® for which a carboxy-terminated polymer may be used as a cross-linking agent. Hydroxyalkyl acrylate and methacrylate copolymers are also suitable for this invention.

### 1.6 HYBRID RESIN SYSTEMS

Hybrid resin systems, such as the epoxy-acrylic and polyester-acrylic mixtures, are also suitable for this invention. However, where such a system is employed, it is preferably a polyester-epoxy hybrid. As known in the art, polyester-epoxy hybrids comprise both epoxy resins and carboxyl terminated polyester resins and may also comprise a catalyst to drive the curing reaction. Typically, the acidic polyester has an equivalent weight between 550 and 1100 and the epoxy resin has an equivalent weight between 600 and 1000. Catalysts for the epoxy-acid reaction include quaternary ammonium salts, quaternary phosphonium salts, phosphines, amines, imidazoles and metal salts. Fore example, zinc oxide (ZnO₂) is effective as a catalyst at 1-5 parts per hundred parts by weight of the resins to improve the cure rate and physical properties of the product.

### 2. FURTHER COMPONENTS OF THE PREMIX

Those particulate materials which may be dispersed within the water as described hereinbefore may additionally or alternatively be added to the premix. For example, the water may have particulate pigments and optionally dispersing agents dispersed or suspended therein whereas further additives - such as fillers, zinc particulates, nano-clay particles, latex particles, flow control agents, degassing agents, and antiblocking agents - may be added within the premix. Equally, these individual additive types may be added in part to the premix and in part suspended or dispersed in the water, rather than exclusively in one or the other. The present invention thus provides for permutation of how different additives may be introduced into the powder coatings.

### PROCESS OF MANUFACTURE OF THE POWDER COATING

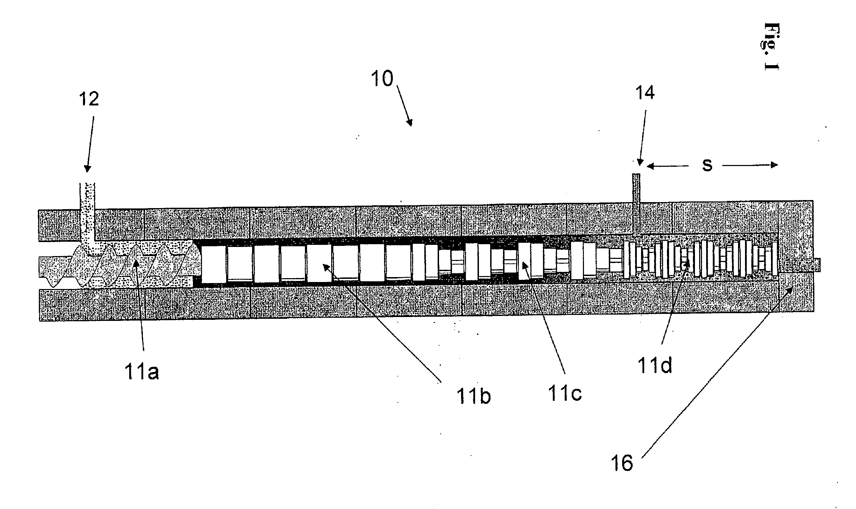

The process of the present invention will be described with reference to Fig. 1 which depicts a melt extruder suitable for use in the present invention.

The components of the premix will, typically, be dry-blended together. Where this dry-blending (and / or later extrusion) could potentially damage certain of the composition components listed above or, equally, where certain abrasive components could damage the blenders and / or the extruders, it may be necessary to add such components to the formed powder rather than include them in the premix itself. For example, it will typically be more appropriate to post-blend additives such as fumed silicas and aluminum oxide.

Referring to FIG. 1, there is provided a melt extruder (10) for processing the powder coating premix. A stream of the premix from the dry blender may be fed directly into the melt extruder at input (12).

The melt extruder (10) is illustrated herein as a sectional drawing showing one half of a co-rotating twin screw extruder. This comprises a tube or barrel within which a pair of screw shafts are fitted with a number of different screw elements .These elements are arranged in a linear configuration such that each pair of screws intermeshes when operated in a co-rotating manner and transports the material towards the exit die (16). Variations on the configuration of the screw elements are of course possible. Such variations, together with the operating rotational speed, allow the control of throughput of the premix at different points along the length of the extruder (10) and hence controls the pressure at different points along the barrel. However, independently of this configuration, it is preferred that the screws are operated continuously and that the molten feed is subjected to high shear mixing within a substantial portion of the melt extruder (10). The barrel is fitted with heating and cooling means to control the melt temperature as required at different points along the barrel. The feed zone (11 a) is generally cooled to below 20°C to prevent blockages in the feed throat. The melting zone (11b) is generally heated above the T_{g} of the resin components. The dispersion zone (11c) is generally cooled to maintain a melt temperature at the operating process temperature, the high shear screw configuration and the work applied by the screws to the melt acting to raise the melt temperature by viscous heating.

The melt extruder (10) also includes an input (14) through which the dispersion or suspension is introduced. Although only one such input (14) is illustrated, it will be appreciated that the dispersion or suspension could, if desired, be added at different input locations along the extruder (10) including the feed throat (12). To ensure maximum uptake of the dispersion or suspension by the materials in the extruder (10), preferably this liquid is directly injected into the barrel portion of the extruder (10).

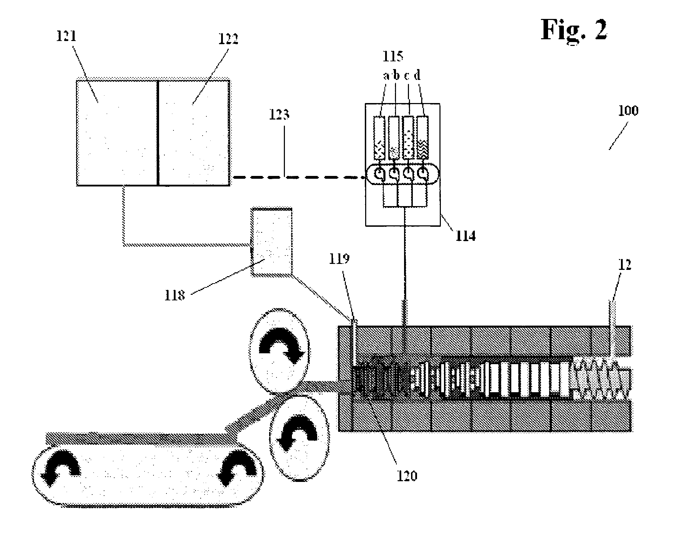

The, or each, input (14) is connected via a feed line to an additive injector system (114, Fig. 2) which includes a pressure source, one or more pressurized vessels for the suspension or dispersion of particulate additives, and a pressure gauge (not shown). The feed line includes a flow meter and a control valve structure (not shown). The pressure source and the control valve may be used to establish the flow rate of the (or each) aqueous suspension or dispersion into the melt extruder (10) under the direct charge of the operator. Alternatively, the flow rate and composition of the aqueous suspension or dispersion may be under feed-back control as will be discussed hereinbelow.

Broadly, the premix blend will pass along the length of extruder (10) and reach portion S wherein it is treated with the aqueous dispersion or suspension. The temperature and pressure conditions in the extruder at portion S must be such that the blended premix remains within the molten state and the injected water does not evaporate or reach a supercritical state. It should be noted that as the suspension or dispersion is added in such small relative amounts (by weight percent), its addition has minimal effect on the melt temperature in the portion S of the extruder (10) and the water temperature quickly equilibrates with that of the melt. As a consequence of this, the skilled person would be aware that a broad range of temperature and pressure conditions for the injection of the suspension or dispersion could be employed. However, it is presently preferred that the suspension or dispersion is preheated, optionally within the injector system (114) prior to its injection into the extruder. Where preheating is employed, the water must not also attain supercritical conditions and as such it is preferable that the water temperature at injection is maintained in the range from 25°C to 90°C.

For the majority of the powder coating compositions for which this invention is envisaged, the melt temperatures in the extruder will typically be less than 200 °C and will preferably be in the range from 110°C to 140°C. For such temperature conditions, the pressure under which the water employed in the present invention evaporates may be found, for example, by consulting Steam Tables such as those in Thermodynamic and Transport Properties of Fluids G. Rogers and Y.R. Mayhew, published by Blackwell UK (ISBNO-631-19703-6). The pressure in the extruder at portion S must be controlled firstly to ensure evaporation of the water does not occur and secondly that supercritical conditions are not attained by that water. Said pressure is a function *inter alia* of the premix feed rate into the extruder, the rotation speed of the screw elements, the extruder temperature and the feed rate and pressure of the injected water.

By way of illustration, to achieve desirable thermal conditions for the added water, the required pressure conditions in the portion S at the temperature of 200°C will be less than 16 Bar. Similarly, the pressure in the portion S when operating in a temperature range of from 110° to 140°C should be maintained in the range from about 1.5 to 3.6 Bar.

Advantageous effects have been found when the suspension or dispersion is pumped into input (14) at pressures higher than the pressure existing within the extruder. A pressure sustaining valve may be used to provide constant load and working conditions for the pump, thereby maintaining process stability. Preferably said sustaining pressure is in the range from 5 to 30 bar, more preferably from 10 to 30 bar and most preferably from 12 to 18 bar. The pressure at which the dispersion or suspension is injected can be controlled using an appropriate pump.
In portion S of the melt extruder (10) the dispersion or suspension is mixed with the materials in the powder coating precursor composition. The amount of liquid water added in the process of this invention ensures that the throughput of the materials being processed is maintained to an extent that is similar to where no water is added. Furthermore, this amount by weight ensures that the water does not reduce the viscosity of the materials to the extent that either poor mixing or flow reversal occurs within the melt extruder (10).

The molten premix which has been mixed in the extruder and treated with the injected dispersion or suspension - hereinafter the powder coating precursor - flows to the extruder die (16). As known in the art, the die (16) may be provided with a plurality of apertures in a number of different configurations. No particular configuration is preferred for the present invention. Equally, the skilled reader will be aware that the die (16) may be replaced by other devices which allow for a pressure drop across them; for example, such a pressure drop could be achieved using a particular screw configuration. In any event, the average residence time of the blend within the melt extruder will generally be less than 2 minutes and more typically in the range from 30 to 45 seconds.

It should be noted that the pressure within the portion S of the extruder may not be the same as that at the die exit (16). That exit pressure depends on the geometry of the die, the viscosity of the melt to be extruded (which is also a function of temperature) and the flow rate. Therefore, by varying the configuration and speed of the screw elements in the extruder and the flow of material at the dispersion or suspension injection point, the injection pressure can be higher or lower than the exit pressure. However, under practical operating conditions, the die exit pressure will preferably be greater than the pressure condition in the portion S of the melt extruder (10).

As the stream of molten precursor passes through the die (16) it is necessarily released to a lower pressure and collected. As a result of such release, the water in the flow stream rapidly - preferably instantaneously gasifies - resulting in the foaming of the extrudate. The evaporation of the water also serves to cool the extrudate and introduces discontinuities into the solid thus formed. At the higher limit of the range by weight of dispersion or suspension addition, this cooling effect will be such that only limited further cooling of the extrudate is required prior to its comminution into particles. However, secondary cooling, using a chilled roller for example, may be required at dispersion or suspension injection levels below 5 wt.% in order to prevent the foamed extrudate from coalescing.

The evaporation of the water ensures its effective removal from the powder coating. Consequently, while the use of water has advantageous effects upon the structure of the cooled extrudate, the water will not detrimentally affect the properties of powder coatings derived from that extrudate. Furthermore, the evaporate (steam) can be recovered and passed through a condenser and / or a separator to regenerate the water.

The powder coating material is recovered, preferably in the form of a stream, and is then subjected to further processing steps in which it is comminuted to the desired particulate dimensions. Such steps may include at least one of grinding and screening. As a consequence of the weaknesses introduced into the material, these steps can be performed faster and / or at lower energetic cost than for extrudates not treated with the dispersion or suspension. The derived particles are then passed to a final product collecting vessel for subsequent handling.

After, but preferably before it is comminuted, the properties of the extrudate - particularly those properties which are intended to be imparted by the particles within the suspension or dispersion added to the melt extruder - may be tested using appropriate measurement means and methods. For example, the extrudate may be tested using an optical measurement sensor or an electrical resistance sensor. Where a desired property is not achieved relative to a "standard", the operator of the extruder may act to rectify this - for subsequent batches or the same batch if practically feasible - by modifying at least one of: the temperature of the melt extruder; the pressure of the melt extruder; the rate at which the premix is fed into the extruder; the flow rate at which the (or each) dispersion or suspension is added to the extruder; the temperature at which the (or each) dispersion or suspension is added to the extruder; and, the composition of the or each suspension or dispersion. The pressure and temperature of the extruder, and the temperature of the suspension or dispersion should be modified within the constraints that evaporation of the added water does not occur and that also supercritical conditions are not attained by that water.

Figure 2 illustrates a second embodiment of the invention in which the apparatus is provided with a means for feedback control. This control will be discussed in relation to dynamic adjustment of the color of the extrudate of a given production batch but it will be recognized that this control may apply equally to other properties of the extrudate which may be measurable in an analogous manner.

The premix of the batch is added to the melt extruder (100) in the manner discussed hereinbefore. Additionally, one or more suspensions or dispersions (115a - d) comprising pigments is prepared - based upon the desired resultant color of the extrudate - and is loaded into the injector system (114).

Referring to Figure 2, the discharge region of the melt extruder (100) is provided with a spectrometer (118) connected to a light-transmitting measurement probe (119). That probe (119) extends via a borehole into the extrusion chamber at measurement point (120) wherein it views the melted material and produces an output signal indicative of the coloration of the product. Suitable probes for this purpose include the Attenuated Total Reflection (ATR) and the Reflection Polymer Melt probes produced by Equitech International Corporation (USA).

The probe (119) is securely engaged within the borehole in the extruder (100) so that so that it does not interfere with the mixing and kneading elements therein. The probe (119) and borehole are also configured to prevent any emergence of the mixed material from the extruder in the region of the measurement point (120). Although there are different methods of achieving these effects, a simple means entails forming the borehole with a step and fitting a stopper (not shown) to the probe (119) that cannot pass that step: A sleeve may also be threadably engaged in the bore to further secure the stopper therein.

The measurement probe (119), in combination with the spectrometer (118), periodically transmits a light signal to an evaluation device (121) based on the mixture of the material present at the measurement point (120).

The light signal is a measure of the actual color intensity of the mixture to be extruded (an "in-process color") and serves as a comparative measurement of the desired color intensity stored in the evaluation device (121). An operation takes place in the evaluation device (121) whereby the reflection values of a standard are compared with the ascertained reflection values of the melt in the extruder. Given the conditions within the melt extruder (100) the probe (119) should ideally further include a thermocouple or an infrared radiation sensor for measuring the temperature of melt in the extruder at substantially the same time as the probe (119) measures the color of the mixture. In this embodiment, the evaluation device (121) should be responsive to the temperature sensor in order to compensate either the measured in-process color or alternatively the "standard" color for the effect of the measured temperature. A suitable evaluation device for this purpose is the Online Color Analyzer provided by Equitech International Corporation (USA).

The evaluation device (121) will establish if any deviation from the standard exists and, preferably, will provide distinct audible and / or visible cues for deviation and non-deviation to the operator of the melt extruder (100). The evaluation device (121) is also operatively connected to a controller (122) that provides a control signal (123) to be fed back into the injector system (114) for the suspension or dispersion.

Where a deviation from the color standard is established which is outside of predetermined set points for the color, the control signal (123) carries instructions to dynamically adjust - i.e. during the processing of the batch - the flow rate at which the (or each) dispersion or suspension is added to the extruder (100). The probe (119) and spectrometer (118) are then used to establish how the dynamic adjustment has affected the color of extrudate by taking measurements thereof after an appropriate time delay. This process repeats until the deviation of the in-process color from the (compensated) color standard is within the predetermined set points for the color.

In the above described method, the color standard may be obtained from pre-existing color data files. Alternatively it may be obtained by direct measurement, for example by using the probe (119) and spectrometer (118) to obtain a measurement of a sample of colored powder which has the desired color but which was prepared on a small scale, in a laboratory for example.

For a given standard or target product color, the feedback control embodiment of the present invention is typically initialized with a nominal composition and flow rate of the aqueous dispersion or suspension (115a-d), said flow rate determining the added amount of pigments per unit weight of a given premix. The closer the initial conditions place the operating point of the extruder to the desired in-process color, the more quickly that color will be realized. It is therefore preferable that the selection of initial conditions is automated using appropriate software.

Once provided with an initial nominal combination of premix, particulate pigments and further additives, the evaluation device (121) and / or the controller (122) should also preferably comprise software components to implement continual colorant additive adjustments to subsequently realize the desired in-process color.

As is known in the art, the target color for the extrudate, the desired in-process color and the measured color for a given illuminant may be decomposed into three signal values describing the three dimensions of color space. A background to color space may be found in *inter alia* Judd and Wyszecki, Color in Business Science and Industry, John Wiley & Sons, New York, 1975; Billmeyer, J. and Saltzman, M., Principles of Color Technology, John Wiley & Sons, New York, 1981; and, Wyszecki and Stiles, Color Science: Concepts and Methods, Quantitative Data and Formulae, 2d ed, John Wiley & Sons, New York, 1982. The software and hardware components of the evaluation device (121) and / or the controller (122) should optimally allow for each of the three parameters or signal values to be adjusted individually to affect color. As such, the software components of these devices will tend to be based upon the Kubelka-Munk theory or linearized approximations thereof.

While this feedback control and dynamic adjustment may lead to the loss of the leading portion of the extrudate of a given batch due to incorrect pigment addition, the remainder of the batch should have the proper color. Furthermore, as the color of the extrudate can be constantly monitored, it can be adjusted as needed. Thus, the present invention provides a significant time savings when manufacturing small batches of pigmented powder coatings.
The present invention is further illustrated in the following example. However, it is to be understood that all changes that come within the scope of the invention are desired to be protected and thus the invention is not to be construed as being limited by these example.

### EXAMPLES

In the following Examples a powder coating was prepared by the addition of aqueous pigment dispersion during extrusion.

### EXAMPLE 1

A powder coating premix was prepared from formulation A as shown in Table 1 below.

**TABLE 1**

| **Formulation A** | | |
|---|---|---|
| **Description** | **Material** | **Weight (kg)** |
| Antioxidant | Irganox 245 | 1.527 |
| Degasser | Benzoin | 2.036 |
| | Ceridust 9615A | 2.036 |
| | Ceridust 3910 | 2.75 |
| | Tinuvin 770DF | 1.75 |
| | Luvotix R400 | 7 |
| | Additol P896 | 35 |
| Filler | Airwhite AW4C | 25 |
| Carboxylic Acid Functional Polyester Resin | IP4125 | 375 |
| Hydroxyalkylamide Curing Agent | Primid XL 552 | 16 |
| Titanium Dioxide Pigment | Tronox CR 826 | 225 |

This formulation was supplied to a Bierstorff Extruder ZE25UT at a constant rate of 10 kg/h using a Brabender screw feeder linked to a process controller to accurately maintain the feed rate. The extruder was fitted with a liquid injection port connected to two volumetric dosing pumps connected to the liquid feed supply. Close to the exit of the extruder but within the zone agitated by the extrusion screws was fitted a colour detector capable of measuring the reflectance spectrum of the molten material during extrusion. Said extruder was maintained at a process temperature of 120°C and an exit pressure of 2 Bar. Further, said extruder was equipped with a die head outlet fitted with 2 holes of 3.5mm diameter from which the (foamed) product was extruded.

An aqueous pigment dispersion of Luconyl NG Red 3370 (available from BASF) containing 60% by weight of Pigment Red 101 was pumped into the injection port together with diluting water at the rates shown in Table 2.

**TABLE 2**

| **Nominal Pigment Level (%)** | **Aqueous Pigment Feed rate (litres/hr)** | **Dilution Water feed rate (litres/h/r)** |
|---|---|---|
| 1 | 0.06 | 0.585 |
| 6 | 0.36 | 0.51 |
| 8 | 0.48 | 0.48 |

During extrusion the colour of the melt was measured using the colour detector. The results of this measurement are given in Table 3.

**TABLE 3**

| **Nominal Pigment Level (%)** | **CIE L*** | **a*** | **b*** |
|---|---|---|---|
| 1 | 61.77 | 12.07 | 1.56 |
| 6 | 64.17 | 3.05 | -3.74 |
| 8 | 73.31 | 9.39 | 3.17 |

### EXAMPLE 2

A powder coating premix was prepared from Formulation A (as described above). This formulation was again supplied to a Bierstorff Extruder ZE25UT at a constant rate of 10 kg/h using a Brabender screw feeder linked to a process controller to accurately maintain the feed rate. The extruder was fitted with separate liquid injection ports equipped with volumetric dosing pumps connected to the liquid feed supply. Said extruder was maintained at a process temperature of 120°C and an exit pressure of 2 Bar. Further, said extruder was equipped with a die head outlet fitted with 2 holes of 3.5mm diameter from which the (foamed) product was extruded.

Pigment dispersion WIMS Hydrotinter 5G448 (available from Akzo Nobel GmbH) was diluted with water to give 7.56% by weight pigment dispersion. During extrusion of the premix A the aqueous dispersion was pumped into the injection port at a rate of 6 liters/hr.

### EXAMPLE 3

A powder coating premix was prepared from formulation A and supplied to the Biestorff extruder configured with the Brabender screw feeder, the process controller, the die head outlet and the two separate injection ports as described above. The feed rate to the extruder was maintained at a constant rate of 10 kg/hr. The extruder was maintained at a process temperature of 120°C and an exit pressure of Bar.

Pigment dispersion WIMS Hydrotinter 5b157 (available from Akzo Nobel GmbH) was diluted with water to give 9.18 % by weight pigment dispersion. During extrusion of the premix A the aqueous dispersion was pumped into the injection port at a rate of 6 liters/h.

### EXAMPLE 4

A powder coating premix was prepared from formulation A and supplied to the Biestorff extruder configured with the Brabender screw feeder, the process controller, the die head outlet and the two separate injection ports as described above. The feed rate to the extruder was maintained at a constant rate of 10 kg/hr. The extruder was maintained at a process temperature of 120°C and an exit pressure of 2 Bar.

Pigment dispersion WIMS Hydrotinter 5R852 (available from Akzo Nobel GmbH) was diluted with water to give 9.96 % by weight pigment dispersion. During extrusion of the premix A the aqueous dispersion was pumped into the injection port at a rate of 6 liters/h

### EXAMPLE 5

A powder coating premix was prepared from formulation A and supplied to the Biestorff extruder configured with the Brabender screw feeder, the process controller, the die head outlet and the two separate injection ports as described above. The feed rate to the extruder was maintained at a constant rate of 10 kg/hr. The extruder was maintained at a process temperature of 120°C and an exit pressure of 2 Bar.

Pigment dispersion WIMS Hydrotinter 5T068 (available from Akzo Nobel GmbH) was diluted with water to give 15% by weight pigment dispersion. During extrusion of the premix A the aqueous dispersion was pumped into the injection port at a rate of 6 liters/hr.

### EXAMPLE 6

The foamed products from Examples 1-5 were cooled to form a solid, dried and finely ground so that the particles could be sieved using a 106 micron sieve. The fine powder produced was then applied and cured by normal means to form a powder coated panel.

In general, the powder coatings prepared in accordance with the invention are suitable for application to a wide variety of substrate materials including metallic and non-metallic substrates. For example, the powder coatings may be applied to various metallic substrates which are inert to the coating material such as iron, steel and aluminum. Suitable non-metallic substrates can include wood and paper-based substrates including particle board and cardboard, glass, ceramics, plastics and rubber, for example.

## Claims

1. A process for the manufacture of a powder coating comprising the steps of:
- Preparing a powder coating premix comprising a resin and optionally a crosslinker for said resin;
- Feeding the premix through a melt extruder, wherein the melt extruder conditions comprise a temperature in the range from 100° to 200°C and a pressure in the range from 1 to 16 bar;
- Cooling the extruded material; and
- Comminuting it to fine particles,
wherein said process is **characterized in that** from 1 to 25 wt. % (based on the weight of said premix) of a suspension or dispersion of a particulate material in water is added to the melt extruder, said water being immiscible with at least the resin of the powder coating premix and said water being maintained within the melt extruder as a superheated, pressurized liquid which evaporates from the premix only as it exits the extruder, the particulate material of the suspension or dispersion being retained within the extruded material.

2. A process according to claim 1, wherein at least part of the suspension or dispersion is added to melt extruder in combination with the premix feed.

3. The process according to claim 1 or claim 2, wherein said resin is selected from the group consisting of thermosetting resins having a softening point between 45° and 120°C.

4. The process according to any one of claims 1 to 3, wherein said suspension or dispersion is added in an amount of from 1 to 15 wt. %, preferably from 3 to 14 wt. % and more preferably from 4 to 7 wt. % (based on the weight of the premix).

5. The process according to any one of claims 1 to 4, wherein said particulate material constitutes from 0.1 to 60 wt. % of the dispersion or suspension.

6. The process according to any one of claims 1 to 5, wherein said particulate material has a mean particle diameter in the range from 0.001 to 5 microns, preferably from 0.01 to 2 microns and more preferably from 0.1 to 0.5 microns.

7. The process according to any one of claims 1 to 6, wherein said particulate material dispersed or suspended in the water comprises organic coloring pigments, inorganic coloring pigments or mixtures thereof.

8. The process according to claim 7, wherein the organic pigment particles are surface modified.

9. The process according to claim 7 or claim 8, wherein the organic coloring pigments are selected from the group consisting of: Azo pigments; phthalocyanine pigments; and, polycyclic / heterocyclic pigments.

10. The process according to claim 7, wherein the inorganic coloring pigments are selected from the group consisting of: rutile and anatase titanium dioxide; carbon black; lampblack; graphite; raw and burnt umber; raw and burnt sienna; calcium carbonate; barium sulfate; kaolinite; talc; silica; micaceous iron oxide; ferric iron oxide brown; red iron oxide; aluminium flakes; strontium chromate; and, zinc phosphate.

11. The process according to any one of claims 7 to 10, wherein the particulate material suspended or dispersed in the water further comprises a dispersing polymer in an amount of from 0.01 to 20 wt. % based on the total weight of the particulate pigments.

12. The process according to any one of claims 1 to 11, further comprising the step of colour testing the extrudate.

13. The process according to any one of claims 1 to 12, further comprising the step of colour testing the molten premix in the extruder.

14. The process according to claim 12 or claim 13, wherein the results of said colour testing are used to modify at least one of: the temperature of the melt extruder; the pressure of the melt extruder; the rate at which the premix is fed into the extruder; the rate at which the dispersion or suspension is added to the extruder; and, the amount of particulate material in said suspension or dispersion.

15. A powder coating composition obtainable by the process as defined in any one of claims 1 to 14.

## Patentansprüche

1. Verfahren zur Herstellung einer Pulverbeschichtung, umfassend die Schritte:
- Herstellen einer Pulverbeschichtungsvormischung, die ein Harz und gegebenenfalls einen Vernetzer für das Harz umfasst;
- Leiten der Vormischung durch einen Schmelzextruder, wobei die Schmelzextruderbedingungen eine Temperatur im Bereich von 100 bis 200 °C und einen Druck im Bereich von 1 bis 16 bar umfassen;
- Abkühlen des extrudierten Materials; und
- Zerkleinern desselben zu feinen Teilchen;
wobei das Verfahren **dadurch gekennzeichnet ist, dass** 1 bis 25 Gew.-% (bezogen auf das Gewicht der Vormischung) einer Suspension oder Dispersion eines teilchenförmigen Materials in Wasser in den Schmelzextruder gegeben werden, wobei das Wasser wenigstens mit dem Harz der Pulverbeschichtungsvormischung nicht mischbar ist und das Wasser innerhalb des Schmelzextruders als überhitzte, unter Druck stehende Flüssigkeit gehalten wird, die erst dann aus der Vormischung verdampft, wenn sie den Extruder verlässt, wobei das teilchenförmigen Material der Suspension oder Dispersion innerhalb des extrudierten Materials zurückgehalten wird.

2. Verfahren gemäß Anspruch 1, wobei wenigstens ein Teil der Suspension oder Dispersion in Kombination mit der eingeleiteten Vormischung in den Schmelzextruder gegeben wird.

3. Verfahren gemäß Anspruch 1 oder 2, wobei das Harz aus der Gruppe ausgewählt ist, die aus duroplastischen Harzen mit einem Erweichungspunkt zwischen 45 und 120 °C besteht.

4. Verfahren gemäß einem der Ansprüche 1 bis 3, wobei die Suspension oder Dispersion in einer Menge von 1 bis 15 Gew.-%, vorzugsweise 3 bis 14 Gew.-% und besonders bevorzugt 4 bis 7 Gew.-% hinzugefügt wird (bezogen auf das Gewicht der Vormischung).

5. Verfahren gemäß einem der Ansprüche 1 bis 4, wobei das teilchenförmige Material 0,1 bis 60 Gew.-% der Dispersion oder Suspension ausmacht.

6. Verfahren gemäß einem der Ansprüche 1 bis 5, wobei das teilchenförmige Material einen mittleren Teilchendurchmesser im Bereich von 0,001 bis 5 µm, vorzugsweise 0,01 bis 2 µm und besonders bevorzugt 0,1 bis 0,5 µm aufweist.

7. Verfahren gemäß einem der Ansprüche 1 bis 6, wobei das in dem Wasser dispergierte oder suspendierte teilchenförmige Material organische Farbpigmente, anorganische Farbpigmente oder Gemische davon umfasst.

8. Verfahren gemäß Anspruch 7, wobei die organischen Pigmentteilchen oberflächenmodifiziert sind.

9. Verfahren gemäß Anspruch 7 oder 8, wobei die organischen Farbpigmente aus der Gruppe ausgewählt sind, die aus Azo-Pigmenten, Phthalocyanin-Pigmenten und polycyclischen/heterocyclischen Pigmenten besteht.

10. Verfahren gemäß Anspruch 7, wobei die anorganischen Farbpigmente aus der Gruppe ausgewählt sind, die aus Rutil- und Anatas-Titandioxid, Ruß, Lampenruß, Graphit, ungebrannter und gebrannter Umbra, Siena natur und gebrannter Siena, Calciumcarbonat, Bariumsulfat, Kaolinit, Talk, Siliciumoxid, Eisenglimmer, Eisenoxidbraun, rotem Eisenoxid, Aluminiumflocken, Strontiumchromat und Zinkphosphat besteht.

11. Verfahren gemäß einem der Ansprüche 7 bis 10, wobei das in dem Wasser suspendierte oder dispergierte teilchenförmige Material weiterhin ein dispergierendes Polymer in einer Menge von 0,01 bis 20 Gew.-% umfasst, bezogen auf das Gesamtgewicht der teilchenförmigen Pigmente.

12. Verfahren gemäß einem der Ansprüche 1 bis 11, das weiterhin den Schritt des Durchführens eines Farbtests mit dem Extrudat umfasst.

13. Verfahren gemäß einem der Ansprüche 1 bis 12, das weiterhin den Schritt des Durchführens eines Farbtests mit der geschmolzenen Vormischung in dem Extruder umfasst.

14. Verfahren gemäß Anspruch 12 oder 13, wobei die Ergebnisse des Farbtests verwendet werden, um wenigstens einen der folgenden Parameter zu modifizieren: die Temperatur des Schmelzextruders; den Druck im Schmelzextruder; die Geschwindigkeit, mit der die Vormischung in den Extruder geleitet wird; die Geschwindigkeit, mit der die Dispersion oder Suspension in den Extruder gegeben wird; und die Menge des teilchenförmigen Materials in der Suspension oder Dispersion.

15. Pulverbeschichtungszusammensetzung, erhältlich nach dem Verfahren gemäß einem der Ansprüche 1 bis 14.

## Revendications

1. Procédé de fabrication d'un revêtement en poudre comprenant les étapes consistant à :
- préparer un pré-mélange de revêtement en poudre comprenant une résine et optionnellement un agent de réticulation pour ladite résine ;
- faire passer le pré-mélange à travers une extrudeuse de produit à l'état fondu, les conditions de l'extrudeuse de produit à l'état fondu comprenant une température dans la plage de 100° à 200 °C et une pression dans la plage de 1 à 16 bar ;
- refroidir le matériau extrudé ; et
- le fragmenter en particules fines,
dans lequel ledit procédé est **caractérisé en ce que** de 1 à 25 % en poids (par rapport au poids dudit pré-mélange) d'une suspension ou d'une dispersion d'une matière particulaire dans l'eau sont ajoutés à l'extrudeuse de produit à l'état fondu, ladite eau étant immiscible avec au moins la résine du pré-mélange de revêtement en poudre et ladite eau étant maintenue à l'intérieur de l'extrudeuse de produit à l'état fondu sous la forme d'un liquide surchauffé sous pression qui ne s'évapore du pré-mélange que lorsqu'il sort de l'extrudeuse, la matière particulaire de la suspension ou de la dispersion étant retenue à l'intérieur du matériau extrudé.

2. Procédé selon la revendication 1, dans lequel au moins une partie de la suspension ou de la dispersion est ajoutée à l'extrudeuse de produit à l'état fondu en combinaison avec la charge de pré-mélange.

3. Procédé selon la revendication 1 ou la revendication 2, dans lequel ladite résine est choisie dans le groupe constitué des résines thermodurcissables ayant un point de ramollissement compris entre 45° et 120 °C.

4. Procédé selon l'une quelconque des revendications 1 à 3, dans lequel ladite suspension ou dispersion est ajoutée en une quantité de 1 à 15 % en poids, de préférence de 3 à 14 % en poids et plus préférablement de 4 à 7 % en poids (par rapport au poids du pré-mélange).

5. Procédé selon l'une quelconque des revendications 1 à 4, dans lequel ladite matière particulaire constitue de 0,1 à 60 % en poids de la dispersion ou de la suspension.

6. Procédé selon l'une quelconque des revendications 1 à 5, dans lequel ladite matière particulaire a un diamètre moyen des particules dans la plage de 0,001 à 5 microns, de préférence de 0,01 à 2 microns et plus préférablement de 0,1 à 0,5 micron.

7. Procédé selon l'une quelconque des revendications 1 à 6, dans lequel ladite matière particulaire dispersée ou en suspension dans l'eau comprend des pigments colorants organiques, des pigments colorants inorganiques ou des mélanges de ceux-ci.

8. Procédé selon la revendication 7, dans lequel les particules de pigment organique sont modifiées en surface.

9. Procédé selon la revendication 7 ou la revendication 8, dans lequel les pigments colorants organiques sont choisis dans le groupe constitué : des pigments azoïques ; des pigments à base de phtalocyanine ; et des pigments polycycliques/hétérocycliques.

10. Procédé selon la revendication 7, dans lequel les pigments colorants inorganiques sont choisis dans le groupe constitué : du dioxyde de titane sous forme de rutile et d'anatase ; du noir de carbone ; du noir de fumée ; du graphite ; de l'ombre naturelle et calcinée ; de la terre de Sienne naturelle et calcinée ; du carbonate de calcium ; du sulfate de baryum ; de la kaolinite ; du talc ; de la silice ; de l'oxyde de fer micacé ; du brun d'oxyde de fer ferrique ; de l'oxyde de fer rouge ; des paillettes d'aluminium ; du chromate de strontium ; et du phosphate de zinc.

11. Procédé selon l'une quelconque des revendications 7 à 10, dans lequel la matière particulaire en suspension ou en dispersion dans l'eau comprend en outre un polymère dispersant en une quantité de 0,01 à 20 % en poids par rapport au poids total des pigments particulaires.

12. Procédé selon l'une quelconque des revendications 1 à 11, comprenant en outre l'étape d'essai de coloration de l'extrudat.

13. Procédé selon l'une quelconque des revendications 1 à 12, comprenant en outre l'étape d'essai de coloration du pré-mélange fondu dans l'extrudeuse.

14. Procédé selon la revendication 12 ou la revendication 13, dans lequel les résultats dudit essai de coloration sont utilisés pour modifier au moins l'une de : la température de l'extrudeuse de produit à l'état fondu ; la pression de l'extrudeuse de produit à l'état fondu ; la vitesse à laquelle le pré-mélange est introduit dans l'extrudeuse ; la vitesse à laquelle la dispersion ou la suspension est ajoutée à l'extrudeuse ; et la quantité de matière particulaire dans ladite suspension ou dispersion.

15. Composition de revêtement en poudre pouvant être obtenue par le procédé selon l'une quelconque des revendications 1 à 14.
